# EUROPEAN PATENT APPLICATION

(11) **EP 4 132 209 A1**
(43) Date of publication of application: **08.02.2023**
(21) Application number: 21785310.0
(22) Date of filing: 08.04.2021
(51) Int. Cl.: H04W 76/28

(54) **DRX CONTROL METHOD AND APPARATUS**

(30) Priority: 10.04.2020 CN 202010281671
(71) Applicant: Huawei Technologies Co., Ltd., Shenzhen, Guangdong 518129, (CN)
(72) Inventor: ZHANG, Zhanzhan, Shenzhen, Guangdong 518129 (CN); TIE, Xiaolei, Shenzhen, Guangdong 518129 (CN); ZHOU, Han, Shenzhen, Guangdong 518129 (CN); HUANG, Wenwen, Shenzhen, Guangdong 518129 (CN); HUA, Meng, Shenzhen, Guangdong 518129 (CN)
(74) Representative: Maiwald GmbH
(86) International application number: PCT/CN2021/086014
(87) International publication number: WO 2021/204215

(57) **Abstract**

Embodiments of this application provide a DRX control method and apparatus, to flexibly control active time of different DRXs when a plurality of DRXs are configured for a terminal device. For example, a network device may send indication information to the terminal device in a first serving cell of the terminal device, to indicate the terminal device to start, prolong, or end DRX active time of a second serving cell of the terminal device. The first serving cell is configured with a first DRX, and the second serving cell is configured with a second DRX. The network device sends indication information based on the first DRX. In this way, when data arrives, the second DRX of the terminal device may transit to DRX active time to monitor the PDCCH, to reduce a data delay and improve a system throughput; when there is no data, the second DRX of the terminal device maintains or transits to DRX inactive time, to reduce power consumption.

## Description

### CROSS-REFERENCE TO RELATED APPLICATIONS

This application claims priority to Chinese Patent Application No. 202010281671.5, filed with the China National Intellectual Property Administration on April 10, 2020 and entitled "DRX CONTROL METHOD AND APPARATUS", which is incorporated herein by reference in its entirety.

### TECHNICAL FIELD

This application relates to the field of communication technologies, and in particular, to a discontinuous reception (Discontinuous Reception, DRX) control method and apparatus.

### BACKGROUND

In a new radio (new radio, NR) system specified in the 3rd generation partnership project (3rd Generation Partnership Project, 3 GPP) protocol, a frequency range of wireless transmission may be divided into a frequency range FR1 and a frequency range FR2. The frequency range FR1 is 410 MHz to 7125 MHz, and the frequency range FR2 is 24.25 GHz to 52.6 GHz. In a carrier aggregation (carrier aggregation, CA) scenario, a plurality of carriers (carriers) may be configured for one terminal device, and each configured carrier is referred to as one component carrier (component carrier, CC). The terminal device may be configured with a component carrier in the FR1, a component carrier in FR2, or component carriers in both the FR1 and the FR2.

In an actual case, each serving cell of the terminal device does not necessarily have a data transmission requirement. If the terminal device maintains DRX active time in all serving cells, unnecessary power consumption is generated. To reduce power losses during DRX configuration in the CA scenario, 3GPP proposes that two DRXs (for example, a first DRX and a second DRX) may be configured for a same terminal device, and each DRX corresponds to a group of DRX parameters.

However, when one DRX (for example, the first DRX) is in DRX active time, and another DRX (for example, the second DRX) is in DRX inactive time, if more data arrives, a network can transmit data only in a serving cell corresponding to the first DRX, but cannot transmit data in a serving cell corresponding to the second DRX. This is unfavorable to improvement of a system throughput, and increases a data delay.

### SUMMARY

Embodiments of this application provide a DRX control method and apparatus, to flexibly control active time of different DRXs (or different component carriers) when a plurality of DRXs are configured for a terminal device. This can reduce a data transmission delay, improve a system throughput, and further reduce power consumption of the terminal device.

Embodiments of this application provide a DRX control method and apparatus, to flexibly control active time of different DRXs (or different component carriers) when a plurality of DRXs are configured for a terminal device. This can reduce a data transmission delay, and improve a system throughput.

According to a first aspect, a DRX control method is provided. The method includes: A terminal device receives indication information sent by a network device in a first serving cell of the terminal device, where the indication information indicates the terminal device to start, prolong, or end DRX active time of a second serving cell of the terminal device, the first serving cell is configured with a first DRX, the second serving cell is configured with a second DRX, and active time of a serving cell configured with the first DRX is different from active time of a serving cell configured with the second DRX; the terminal device starts, prolongs, or ends the DRX active time of the second serving cell based on the indication information.

In this embodiment of this application, the network device may indicate a DRX status of another DRX (in other words, indicate across DRX groups or across carriers) based on one DRX, to more flexibly control DRX statuses of the terminal device in different DRXs. In this way, when data arrives, another DRX may transit to the DRX active time to monitor the PDCCH, to improve a throughput of the terminal device and reduce a data delay; when there is no data, another DRX may maintain or transit to DRX inactive time, so that the terminal device may turn off a radio frequency chain corresponding to the another DRX, reducing power consumption.

In a possible design, the terminal device may receive first indication information in the first serving cell in DRX inactive time of the second serving cell. The first indication information indicates the terminal device to start a DRX inactivity timer corresponding to the second DRX. The terminal device may start the DRX inactivity timer corresponding to the second DRX in the DRX inactive time of the second serving cell based on the first indication information, to end the DRX inactive time of the second serving cell, and start the DRX active time of the second serving cell.

In this design, the network device sends the first indication information to the terminal device in the first serving cell in the DRX inactive time of the second serving cell, so that the terminal device starts the DRX inactivity timer corresponding to the second DRX, further ends the DRX inactive time of the second serving cell, and starts the DRX active time of the second serving cell. In this way, the second serving cell can transmit data, the throughput of the terminal device can be improved, and the data delay can be reduced. In a possible design, the terminal device may alternatively receive a PDCCH used to indicate new data transmission in any serving cell configured with the second DRX in the DRX active time of the second serving cell; and start or restart the DRX inactivity timer corresponding to the second DRX.

In this design, if the terminal device receives the PDCCH for new data transmission in any serving cell configured with the second DRX in the active time of the second DRX, the terminal device starts or restarts the DRX inactivity timer corresponding to the second DRX. This can prolong the active time of the second DRX, further improve the throughput of the terminal device and reduce the data delay.

In a possible design, the terminal device may receive second indication information in the first serving cell in the DRX active time of the second serving cell. The second indication information indicates the terminal device to start or restart the DRX inactivity timer corresponding to the second DRX. The terminal device may start or restart the DRX inactivity timer corresponding to the second DRX in the DRX active time of the second serving cell based on the second indication information, to prolong the DRX active time of the second serving cell.

In this design, if the terminal device receives the second indication information in the first serving cell in the active time of the second DRX, the terminal device starts or restarts the DRX inactivity timer corresponding to the second DRX, to prolong the active time of the second DRX. This can further improve the throughput of the terminal device and reduce the data delay.

In a possible design, the terminal device may receive third indication information in the first serving cell in DRX active time of the second serving cell. The third indication information indicates the terminal device to stop a DRX inactivity timer corresponding to the second DRX. The terminal device may stop the DRX inactivity timer corresponding to the second DRX in the DRX active time of the second serving cell based on the third indication information, to end the DRX active time of the second serving cell, and start the DRX inactive time of the second serving cell.

In this design, if the terminal device receives the third indication information in the first serving cell in the active time of the second DRX, the terminal device stops the DRX inactivity timer corresponding to the second DRX. This can end the active time of the second DRX and reduce power consumption.

In a possible design, the terminal device may further receive indication information sent by the network device in a third serving cell of the terminal device. The indication information sent by the network device in the third serving cell indicates the terminal device to start, prolong, or end DRX active time of the first serving cell of the terminal device, and the third serving cell is configured with the second DRX. The terminal device starts, prolongs, or ends the DRX active time of the first serving cell based on the indication information sent by the network device in the third serving cell.

In this design, the network device may control status switching of another DRX (for example, the second DRX) based on the first DRX, and control status switching of the first DRX based on another DRX (for example, a third DRX, the second DRX, or another DRX different from the second DRX), further improving flexibility of the DRX control method.

In a possible design, the first serving cell is a primary serving cell of the terminal device, and the second serving cell is a secondary serving cell of the terminal device. Alternatively, the first serving cell is a secondary serving cell of the terminal device, and the second serving cell is a primary serving cell of the terminal device. Alternatively, both the first serving cell and the second serving cell are secondary serving cells of the terminal device.

In this design, the primary serving cell may indicate a DRX status of the secondary serving cell, or the secondary serving cell may indicate a DRX status of the primary serving cell, or the secondary serving cells may indicate a DRX status of each other, so that flexibility of the solution can be further improved.

In a possible design, the network device is configured with at least two DRXs. The at least two DRXs include the first DRX and the second DRX. The indication information sent by the network device in the first serving cell indicates the terminal device to start, prolong, or end DRX active time of a serving cell corresponding to another DRX in the at least two DRXs other than the first DRX. The another DRX includes the second DRX.

In this design, the first DRX of the network device may indicate state switching of all other DRXs by using one piece of indication information, so that DRX control efficiency and flexibility can be further improved.

In a possible design, the indication information sent by the network device in the first serving cell includes a start moment at which the terminal device starts, prolongs, or ends the DRX active time of the second serving cell.

In this design, the network device may indicate, by using the indication information, a start moment at which the terminal device starts, prolongs, or ends the DRX active time of the second serving cell, to further improve DRX control efficiency.

In a possible design, the indication information sent by the network device in the first serving cell is carried in downlink control information DCI or a physical downlink shared channel PDSCH.

According to a second aspect, a DRX control method is provided. The method includes: A network device obtains indication information, where the indication information indicates a terminal device to start, prolong, or end DRX active time of a second serving cell of the terminal device, where the second serving cell is configured with a second DRX; the network device sends indication information in a first serving cell of the terminal device, where the first serving cell is configured with a first DRX, and active time of a serving cell configured with the first DRX is different from active time of a serving cell configured with the second DRX.

In a possible design, that the network device sends indication information in a first serving cell of the terminal device includes: The network device sends first indication information in the first serving cell in the DRX inactive time of the second serving cell, where the first indication information indicates the terminal device to start a DRX inactivity timer corresponding to the second DRX.

In a possible design, the network device sends a physical downlink control channel PDCCH used to indicate new data transmission in any serving cell configured with the second DRX in the DRX active time of the second serving cell.

In a possible design, that the network device sends indication information in a first serving cell of the terminal device includes: The network device sends second indication information in the first serving cell in the DRX active time of the second serving cell, where the second indication information indicates the terminal device to start or restart the DRX inactivity timer corresponding to the second DRX.

In a possible design, that the network device sends indication information in a first serving cell of the terminal device includes: The network device sends third indication information in the first serving cell in the DRX active time of the second serving cell, where the third indication information indicates the terminal device to stop the DRX inactivity timer corresponding to the second DRX.

In a possible design, the method further includes: The network device sends indication information in a third serving cell of the terminal device, to indicate the terminal device to start, prolong, or end DRX active time of the first serving cell of the terminal device. The third serving cell is configured with the second DRX.

In a possible design, the first serving cell is a primary serving cell of the terminal device, and the second serving cell is a secondary serving cell of the terminal device. Alternatively, both the first serving cell and the second serving cell are secondary serving cells of the terminal device.

In a possible design, the network device is configured with at least two DRXs. The at least two DRXs include the first DRX and the second DRX. The indication information sent by the network device in the first serving cell indicates the terminal device to start, prolong, or end DRX active time of a serving cell corresponding to another DRX in the at least two DRXs other than the first DRX. The another DRX includes the second DRX.

In a possible design, the indication information sent by the network device in the first serving cell includes a start moment at which the terminal device starts, prolongs, or ends the DRX active time of the second serving cell.

In a possible design, the indication information sent by the network device in the first serving cell is carried in downlink control information DCI or a physical downlink shared channel PDSCH.

According to a third aspect, a DRX control apparatus is provided. The apparatus may be a terminal device or an apparatus in a terminal device. The apparatus includes a module configured to perform the method in the first aspect or any possible design of the first aspect.

For example, the apparatus may include: a receiving module, configured to receive indication information sent by a network device in a first serving cell of the apparatus, where the indication information indicates the apparatus to start, prolong, or end DRX active time of a second serving cell of the apparatus, the first serving cell is configured with a first DRX, the second serving cell is configured with a second DRX, and active time of a serving cell configured with the first DRX is different from active time of a serving cell configured with the second DRX; and a processing module, configured to start, prolong, or end DRX active time of the second serving cell based on the indication information.

In a possible design, the receiving module is specifically configured to: receive first indication information in the first serving cell in the DRX inactive time of the second serving cell, where the first indication information indicates the apparatus to start a DRX inactivity timer corresponding to the second DRX. The processing module is specifically configured to: start the DRX inactivity timer corresponding to the second DRX in the DRX inactive time of the second serving cell based on the first indication information, to end the DRX inactive time of the second serving cell, and start the DRX active time of the second serving cell.

In a possible design, the receiving module is further configured to: receive a physical downlink control channel PDCCH used to indicate new data transmission in any serving cell configured with the second DRX in the DRX active time of the second serving cell. The processing module is further configured to: start or restart the DRX inactivity timer corresponding to the second DRX.

In a possible design, the receiving module is specifically configured to: receive second indication information in the first serving cell in the DRX active time of the second serving cell, where the second indication information indicates the apparatus to start or restart the DRX inactivity timer corresponding to the second DRX. The processing module is specifically configured to: start or restart the DRX inactivity timer corresponding to the second DRX in the DRX active time of the second serving cell based on the second indication information, to prolong the DRX active time of the second serving cell.

In a possible design, the receiving module is specifically configured to: receive third indication information in the first serving cell in the DRX active time of the second serving cell, where the third indication information indicates the apparatus to stop a DRX inactivity timer corresponding to the second DRX. The processing module is specifically configured to: stop the DRX inactivity timer corresponding to the second DRX in the DRX active time of the second serving cell based on the third indication information, to end the DRX active time of the second serving cell, and start the DRX inactive time of the second serving cell.

In a possible design, the receiving module is further configured to: receive indication information sent by the network device in a third serving cell of the apparatus, where the indication information sent by the network device in the third serving cell indicates the apparatus to start, prolong, or end DRX active time of the first serving cell of the apparatus, and the third serving cell is configured with the second DRX. The processing module is further configured to: start, prolong, or end the DRX active time of the first serving cell based on the indication information sent by the network device in the third serving cell.

In a possible design, the first serving cell is a primary serving cell of the apparatus, and the second serving cell is a secondary serving cell of the apparatus. Alternatively, both the first serving cell and the second serving cell are secondary serving cells of the apparatus.

In a possible design, the network device is configured with at least two DRXs. The at least two DRXs include the first DRX and the second DRX. The indication information sent by the network device in the first serving cell indicates the apparatus to start, prolong, or end DRX active time of a serving cell corresponding to another DRX in the at least two DRXs other than the first DRX. The another DRX includes the second DRX.

In a possible design, the indication information sent by the network device in the first serving cell includes a start moment at which the apparatus starts, prolongs, or ends the DRX active time of the second serving cell.

In a possible design, the indication information sent by the network device in the first serving cell is carried in downlink control information DCI or a physical downlink shared channel PDSCH.

According to a fourth aspect, a DRX control apparatus is provided. The apparatus may be a network device or an apparatus in a network device. The apparatus includes a module configured to perform the method in the second aspect or any possible design of the second aspect.

For example, the apparatus may include: a processing module, configured to obtain indication information, where the indication information indicates a terminal device to start, prolong, or end DRX active time of a second serving cell of the terminal device, where the second serving cell is configured with a second DRX; and a sending module, configured to send indication information in a first serving cell of the terminal device, where the first serving cell is configured with a first DRX, and active time of a serving cell configured with the first DRX is different from active time of a serving cell configured with the second DRX.

In a possible design, the sending module is specifically configured to: send first indication information in the first serving cell in the DRX inactive time of the second serving cell. The first indication information indicates the terminal device to start a DRX inactivity timer corresponding to the second DRX.

In a possible design, the sending module is further configured to: send a physical downlink control channel PDCCH used to indicate new data transmission in any serving cell configured with the second DRX in the DRX active time of the second serving cell.

In a possible design, the sending module is specifically configured to: send second indication information in the first serving cell in the DRX active time of the second serving cell. The second indication information indicates the terminal device to start or restart the DRX inactivity timer corresponding to the second DRX.

In a possible design, the sending module is specifically configured to: send third indication information in the first serving cell in DRX active time of the second serving cell. The third indication information indicates the terminal device to stop a DRX inactivity timer corresponding to the second DRX.

In a possible design, the sending module is further configured to: send indication information in a third serving cell of the terminal device, to indicate the terminal device to start, prolong, or end DRX active time of the first serving cell of the terminal device. The third serving cell is configured with the second DRX.

In a possible design, the first serving cell is a primary serving cell of the terminal device, and the second serving cell is a secondary serving cell of the terminal device. Alternatively, both the first serving cell and the second serving cell are secondary serving cells of the terminal device.

In a possible design, the apparatus is configured with at least two DRXs. The at least two DRXs include the first DRX and the second DRX. The indication information sent by the apparatus in the first serving cell indicates the terminal device to start, prolong, or end DRX active time of a serving cell corresponding to another DRX in the at least two DRXs other than the first DRX. The another DRX includes the second DRX.

In a possible design, the indication information sent by the apparatus in the first serving cell includes a start moment at which the terminal device starts, prolongs, or ends the DRX active time of the second serving cell.

In a possible design, the indication information sent by the apparatus in the first serving cell is carried in downlink control information DCI or a physical downlink shared channel PDSCH.

According to a fifth aspect, a DRX control apparatus is provided. The apparatus includes at least one processor and a communication interface that is communicatively connected to the at least one processor. The at least one processor executes an instruction stored in a memory, to enable the apparatus to perform the method in the first aspect, any possible design of the first aspect, the second aspect, or any possible design of the second aspect.

In a possible design, the memory is located outside the apparatus.

In a possible design, the apparatus includes the memory. The memory is connected to the at least one processor, and the memory stores an instruction that can be executed by the at least one processor.

According to a sixth aspect, a computer-readable storage medium is provided, including a program or instructions. When the program or the instructions is or are run on a computer, the method in the first aspect, any possible design of the first aspect, the second aspect, or any possible design of the second aspect is performed.

According to a seventh aspect, a computer program product is provided. When the computer program product runs on a computer, the computer is enabled to perform the method according to any one of claims 1 to 10, 11 to 20.

According to an eighth aspect, a chip is provided. The chip is coupled to a memory and is configured to read and execute program instructions stored in the memory, to implement the method in the first aspect, any possible design of the first aspect, the second aspect, or any possible design of the second aspect.

According to a ninth aspect, a communication system is provided, including the apparatus in the third aspect, any possible design of the third aspect, the fourth aspect, or any possible design of the fourth aspect.

### BRIEF DESCRIPTION OF DRAWINGS

FIG. 1 is a schematic diagram of a status of a terminal device configured with a C-DRX mechanism;
FIG. 2 is a schematic diagram of a status of a DRX inactivity timer;
FIG. 3 is a schematic diagram of a status of a terminal device configured with two DRXs;
FIG. 4 is a schematic diagram of a status of a terminal device configured with two DRXs;
FIG. 5 is a schematic diagram of a network architecture to which an embodiment of this application is applicable;
FIG. 6 is a schematic flowchart of a DRX control method according to an embodiment of this application;
FIG. 7A to FIG. 7D are schematic diagrams of controlling a status of a second DRX based on a first DRX according to an embodiment of this application;
FIG. 8 is a schematic diagram of a structure of a DRX control apparatus according to an embodiment of this application;

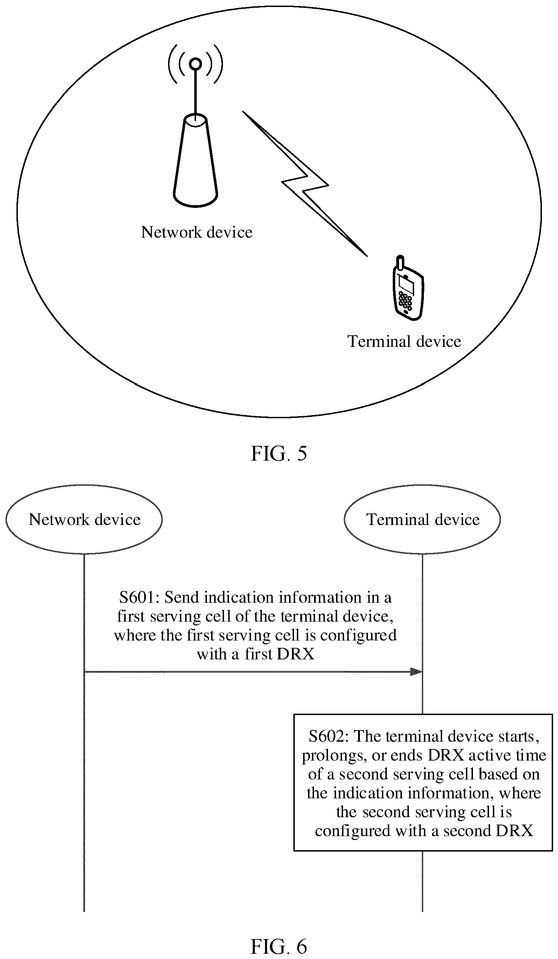

FIG.6 is a schematic diagram of a structure of another DRX control apparatus according to an embodiment of this application; and

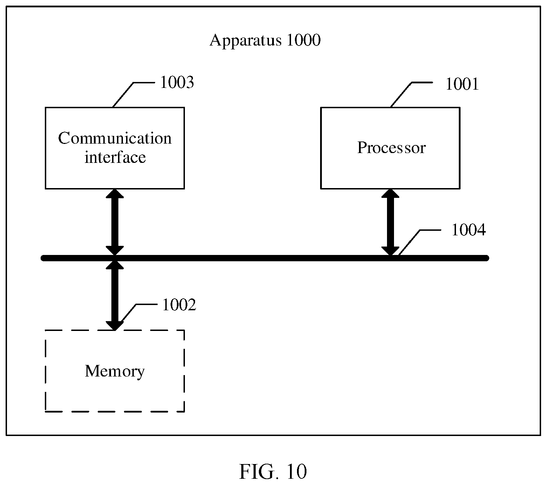

FIG. 10 is a schematic diagram of a structure of another DRX control apparatus according to an embodiment of this application.

### DESCRIPTION OF EMBODIMENTS

A connected discontinuous reception (Connected Discontinuous Reception, C-DRX, or DRX) mechanism may be configured for a terminal device in a radio resource control (Radio Resource Control, RRC) connected (Connected) mode. In this way, the terminal device may enter DRX on duration (ON Duration) at intervals, and monitor a physical downlink control channel (Physical Downlink Control Channel, PDCCH) and receive and send data in the on duration. In another time period, the terminal device may enter a sleep state without monitoring a PDCCH, to reduce power consumption of the terminal device.

When a DRX is configured for the terminal device, a status of the terminal device may be classified into a DRX active (active) state and a DRX inactive (inactive) state (or referred to as a sleep state). A time period in which the terminal device is in the DRX active state is referred to as active time (active time), and a time period in which the terminal device is in the DRX inactive state is referred to as inactive time (inactive time). When the terminal device is in the DRX active time, the terminal device continuously monitors the PDCCH. If the terminal device exits the DRX active state, in other words, enters the sleep state, the terminal does not monitor a PDCCH, so that power consumption is reduced.

When any one of the following timers is running, the terminal device is in the DRX active state (in other words, in the DRX active time):
a DRX on duration timer (drx-onDurationTimer);
a DRX inactivity timer (drx-InactivityTimer);
a DRX downlink retransmission timer (drx-RetransmissionTimerDL);
a DRX uplink retransmission timer (drx-RetransmissionTimerUL); and
a random access contention resolution timer (ra-ContentionResolutionTimer).

In addition, the DRX active time further includes another case, for example, a waiting period after the terminal device sends a scheduling request (Scheduling Request, SR) on the PUCCH, or a period in which the terminal device has not received a PDCCH indicating new transmission after successfully receiving a random access response (Random Access Response, RAR) for non-contention based (non-contention based) random access.

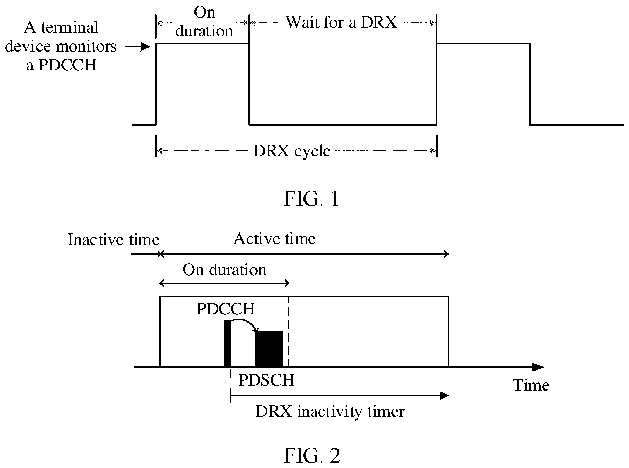

FIG. 1 is a schematic diagram of a status of a terminal device configured with a C-DRX mechanism. At a start moment of a C-DRX cycle, the terminal first enters on duration, and starts a timer drx-onDurationTimer (that the timer starts to run indicates that the timer enters DRX active time). If the terminal device receives a PDCCH indicating new downlink or uplink data transmission during running of drx-onDurationTimer, the terminal device starts (or restarts) a timer drx-InactivityTimer. In this way, the terminal device is always in a DRX active state (which may be understood as that a time length in which the terminal device is originally in the active state is a time length of the on duration, and running drx-InactivityTimer may prolong a time period in which the terminal device is in the active state). Only when the timer drx-InactivityTimer expires, or the terminal device receives a related media access control (Medium access control, MAC) control element (control element, CE) signaling for stopping the timer drx-InactivityTimer in advance, the terminal device ends the active time and enters inactive time (in other words, the terminal device enters a sleep state from the active state). It is easy to understand that the DRX on duration (ON Duration) described herein represents a time period, and is determined by the timer drx-onDurationTimer, and the length of the on duration is equal to a length of the timer drx-onDurationTimer configured by a network device.

The drx-InactivityTimer is usually started or restarted at a first symbol after a PDCCH indicating new data transmission. As shown in FIG. 2, a PDCCH in FIG. 2 is used to schedule new physical downlink shared channel (Physical Downlink Shared Channel, PDSCH) transmission.

As described above, a terminal device in a DRX active state continuously monitors the PDCCH. If the terminal device exits the DRX active state (enters a sleep state), the terminal does not monitor the PDCCH. Therefore, the terminal device may stay in the DRX active state for a longer period through running drx-InactivityTimer in on duration, and continuously monitor the PDCCH until drx-InactivityTimer stops running.

In a new radio (new radio, NR) system specified in the 3rd generation partnership project (3rd Generation Partnership Project, 3 GPP) protocol, a frequency range of wireless transmission is divided into a frequency range FR1 and a frequency range FR2. The frequency range FR1 is 410 MHz to 7125 MHz, and the frequency range FR2 is 24.25 GHz to 52.6 GHz. The frequency range FR2 is a high frequency band, and is usually referred to as a millimeter wave (millimeter wave, mmWave). In a carrier aggregation (carrier aggregation, CA) scenario, a plurality of carriers (carriers) may be configured for one terminal device, and each configured carrier is referred to as one component carrier (Component Carrier, CC). The terminal device may be configured with a component carrier in the FR1, a component carrier in FR2, or component carriers in both the FR1 and the FR2.

The terminal device consumes higher power in a CA scenario is higher than that in a non-CA scenario, especially in a carrier aggregation scenario between the FR1 and the FR2. A main reason is as follows: An operating bandwidth is higher in the CA scenario. When the terminal device operates on an inter-band CA, the terminal device needs to enable a plurality of radio frequency chains to connect a plurality of inter-band component carriers. As a result, the terminal device needs to perform more data monitoring and decoding in a unit time period. On a highfrequency component carrier in the FR2, the terminal device further needs to maintain a connection beam between the terminal device and a base station. Therefore, the terminal device further needs to perform beam management measurement.

The terminal device suffers a high power loss in DRX active time in a DRX configuration. As described in the background, the terminal device needs to periodically enter the DRX active time to monitor the PDCCH, and consumes high power in monitoring the PDCCH, receiving and decoding the PDSCH, or sending the PUSCH. When data is sparse, a network device does not send PDCCH scheduling data. Therefore, unnecessary power is consumed when the terminal device monitors the PDCCH. In addition, the terminal device further needs to perform some measurement and uplink transmission in the DRX active time, for example, channel state information (channel state information, CSI)/layer 1 reference signal received power (layer 1 reference signal received power, L1-RSRP) measurement, radio resource management (radio resource management, RRM) measurement, CSI/L1-RSRP reporting, and sounding reference signal (sounding reference signal, SRS) sending.

The terminal device consumes higher power in the DRX configuration in the CA scenario. The network device usually configures only one set of DRX parameters. One media access control entity (MAC entity) of the terminal device runs only one set of DRX parameters. A DRX status of the terminal device applies to all serving cells in the CA (it should be understood that a "serving cell" in this specification may also be referred to as a "cell"). If the terminal device is in the DRX active time, all activated serving cells of the terminal device are in the DRX active time, and the terminal device needs to monitor the PDCCH in all the activated serving cells. However, in an actual case, each serving cell of the terminal device does not necessarily have a data transmission requirement. If the terminal device maintains DRX active time in all serving cells, unnecessary power is consumed.

To reduce a power loss in the DRX configuration in the CA scenario, 3GPP proposes that two DRXs (or two DRX modes) are configured in the CA scenario, each DRX corresponds to a group of DRX parameters, and statuses of the terminal device in different DRX configurations are independent of each other (which may be understood as that the terminal device independently runs each DRX mode). In this specification, one or more cells for which a same DRX is configured may be referred to as a DRX group. For example, one or more cells for which a first DRX is configured are referred to as a first DRX group, and one or more cells for which a second DRX is configured are referred to as a second DRX group. If the first DRX is configured for one cell, it may be considered that the cell is configured to be in the first DRX group. If the second DRX is configured for one cell, it may be considered that the cell is configured to be in the second DRX group.

It should be understood that descriptions such as "DRX configuration", "configuring a DRX mode", "configuring a DRX parameter", and "configuring a DRX group" in this specification is mutually explainable, for example, may have the same meaning.

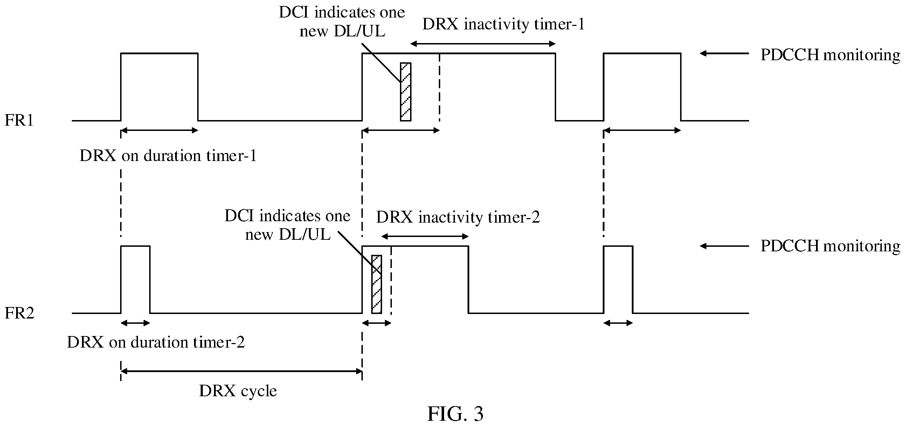

Further, the first DRX and the second DRX may have different DRX parameters. For example, different drx-onDurationTimer and/or different drx-InactivityTimer may be configured for the two DRXs. For example, drx-onDurationTimer-1 and drx-InactivityTimer-1 are configured for the first DRX, and drx-onDurationTimer-2 and drx-InactivityTimer-2 are configured for the second DRX. It is assumed that a network configures values of either or both of two timers in one DRX to be respectively less than values of either or both of two timers in the other DRX, for example, drx-onDurationTimer-2 < drx-onDurationTimer-1, and drx-InactivityTimer-2 < drx-InactivityTimer-1. In this case, it is easy to understand that when there is no data transmission or data transmission in a serving cell corresponding to the second DRX is sparse, DRX active time of the second DRX is shorter than DRX active time of the first DRX. Therefore, the terminal device may enter the DRX inactive time faster on a component carrier of the second DRX, to reduce a power loss on the component carrier of the second DRX. As shown in FIG. 3, the first DRX is configured for a component carrier in the FR1, and the second DRX is configured for a component carrier in the FR2.

Other DRX parameters different from the two timers drx-onDurationTimer and drx-InactivityTimer of the first DRX and the second DRX may be the same or different. The two DRXs may be independently configured with a DRX parameter or may share a DRX parameter. This is not limited in the present invention. For example, the two DRXs may share other DRX parameters, and have a same long DRX cycle (Long DRX cycle) parameter, a same short DRX cycle (short DRX cycle) parameter, and the like.

As described above, when two DRXs (or two DRX groups, or two groups of DRX parameters, or the like) are configured for the terminal device, mutually independent drx-onDurationTimer and/or drx-InactivityTimer may be configured for the two DRXs. The two DRXs of the terminal device independently control corresponding drx-onDurationTimer and/or drx-InactivityTimer. Therefore, the terminal device may be in different DRX statuses in the two DRXs. In this way, in comparison with one DRX configuration, the DRX active time of the terminal device can be controlled more flexibly, to reduce power consumption.

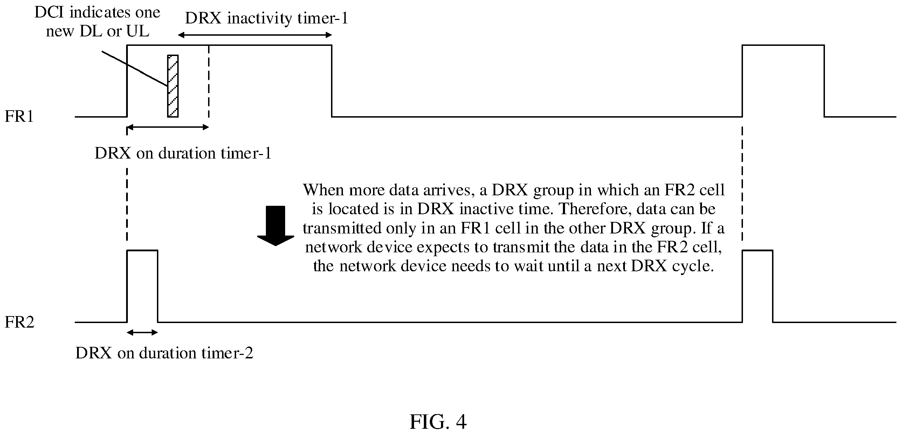

However, when a serving cell (cell) of one DRX (for example, the first DRX) is in the DRX active time, and a serving cell of another DRX (for example, the second DRX) is in the DRX inactive time, if more data arrives, the network can transmit data only in the cell corresponding to the first DRX, but cannot transmit data in the cell corresponding to the second DRX. As shown in FIG. 4, the terminal device is configured with carrier aggregation of an FR1 cell and an FR2 cell, the first DRX is configured for the FR1 cell (in other words, the FR1 cell is in the first DRX group), and the second DRX is configured for the FR2 cell (in other words, the FR2 cell is in the second DRX group). When the FR1 cell is in the DRX active time and the FR2 cell is not in the DRX active time, if more data arrives, the data can be transmitted only in the FR1 cell in the other DRX group because the second DRX of the FR2 cell is in the DRX inactive time. If the network device expects to transmit the data in the FR2 cell, the network device needs to wait until a next DRX cycle of the second DRX. This is unfavorable to improvement of a system throughput, and increases a data delay.

In view of this, embodiments of this application provide a DRX control method and apparatus, to effectively control active time of different DRXs when a plurality of DRXs are configured for the terminal device. In this way, power consumption can be reduced without reducing a throughput of the terminal device and increasing a data delay of the terminal device.

It should be understood that the technical solution in embodiments of this application may be applied to various communication systems, for example, a 4th Generation (4th Generation, 4G) communication system, a 5th Generation (5th Generation, 5G) communication system, a machine type communication (Machine Type Communication, MTC) system, a device to device (device to device, D2D) system, an Internet of Things (Internet of Things, IoT) system, an Internet of Vehicles (vehicle-to-everything, V2X) system, a Narrowband Internet of Things (Narrowband Internet of Things, NB-IoT) system, a new communication system that may emerge in future communication development, and the like, provided that a communication entity in the communication system can be configured with a plurality of sets of DRX parameters. One DRX corresponds to one set of DRX parameters.

For example, FIG. 5 shows a network architecture to which an embodiment of this application is applicable. The communication system includes a network device and a terminal device. In the communication system, the network device may send a signal to the terminal device via a downlink channel, and the terminal device may send a signal to the network device via an uplink channel.

The terminal device may be a device that provides a user with voice and/or data connectivity, for example, may be a handheld device with a wireless connection function, or a processing device connected to a wireless modem. The terminal device may communicate with a core network through a radio access network (radio access network, RAN), and exchange a voice and/or data with the RAN. The terminal device may include user equipment (user equipment, UE), a wireless terminal device, a mobile terminal device, a device-to-device (device-to-device, D2D) communication terminal device, a V2X terminal device, a machine-to-machine/machine-type communication (machine-to-machine/machine-type communication, M2NWTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, or a portable, pocket-sized, handheld, or computer built-in mobile apparatus, For example, it may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

As an example instead of a limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, smart helmets, or smart jewelry for monitoring physical signs.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board unit, OBU).

The network device includes, for example, an access network (access network, AN) device and a radio access network (radio access network, RAN) device. The access network device, for example, a base station (for example, an access point), may be a device, in the access network, that communicates with a wireless terminal device over an air interface through one or more cells. The base station may be configured to mutually convert a received over-the-air frame and an internet protocol (IP) packet, and serve as a router between the terminal device and a remaining part of the access network. The remaining part of the access network may include an IP network. The network device may further coordinate attribute management of the air interface. For example, the network device may be an evolved NodeB (NodeB, eNB, or e-NodeB, evolved Node B) in a long term evolution (long term evolution, LTE) system or a long term evolution-advanced (long term evolution-advanced, LTE-A) system; or may be a next generation NodeB (next generation NodeB, gNB), a next generation evolved NodeB (next generation evolved NodeB, ng-eNB), or an enhanced next generation gNB en-gNB (enhanced next generation NodeB, gNB) in a 5th generation (5th generation, 5G) mobile communication technology new radio (new radio, NR) system; or may include a centralized unit (centralized unit, CU) and a distributed unit (distributed unit, DU) in a cloud access network (cloud radio access network, Cloud RAN) system, and may further include a relay device. This is not limited in embodiments of this application.

The foregoing describes the communication system to which embodiments of this application is applicable. The following describes a DRX control method provided in an embodiment of this application with reference to the accompanying drawings.

It should be understood that the terms "system" and "network" may be used interchangeably in embodiments of this application. "At least one" means one or more, and "a plurality of" means two or more. "And/or" describes an association relationship between associated objects, and indicates that three relationships may exist. For example, A and/or B may indicate the following three cases: A exists alone, both A and B exist, and B exists alone, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one of a, b, or c may represent a, b, c, a and b, a and c, b and c, or a, b, and c.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, a first priority criterion and a second priority criterion are merely used to distinguish between different criteria, but do not indicate different content, priorities, importance, or the like of the two criteria.

As shown in FIG. 6, an embodiment of this application provides a DRX control method that may be applied to the communication system shown in FIG. 5. The method includes the following steps.

S601: A network device sends indication information in a first serving cell of a terminal device, and the terminal device receives the indication information, where the first serving cell is configured with a first DRX.

S602: The terminal device starts, prolongs, or ends DRX active time of the second serving cell based on the indication information, where the second serving cell is configured with a second DRX.

Specifically, in embodiments of this application, the terminal device may camp on a plurality of serving cells (for example, including one primary serving cell and one or more secondary serving cells) of the network device, where different serving cells are on different component carriers.

The network device may configure at least two DRXs. The at least two DRXs include the first DRX and the second DRX, and certainly may further include another DRX.

One DRX is configured for each serving cell of the terminal device, and DRXs configured for different serving cells may be the same or different.

Serving cells configured with a same DRX may be referred to as a DRX group, in other words, cells in a same DRX group are configured with a same DRX (in other words, configured with a same DRX parameter).

For example, a serving cell configured with the first DRX is a first DRX group, where the first DRX group includes the first serving cell. Therefore, that the first serving cell is configured with a first DRX may also be understood as that the first serving cell is configured to be in the first DRX group. A serving cell configured with the second DRX is a second DRX group, where the second DRX group includes the second serving cell. Similarly, that the second serving cell is configured with a second DRX may also be understood as that the second serving cell is configured to be in the second DRX group.

In embodiments of this application, different DRXs may have different DRX active time, in other words, serving cells configured with different DRXs have different DRX active time. For example, a serving cell (for example, the first serving cell) configured with the first DRX and a serving cell (for example, the second serving cell) configured with the second DRX may have different DRX active time.

For example, different DRXs may correspond to different timers. For example, the first DRX corresponds to drx-onDurationTimer-1 and drx-InactivityTimer-1, and the second DRX corresponds to drx-onDurationTimer-2 and drx-InactivityTimer-2. drx-onDurationTimer-1 and drx-onDurationTimer-2 may have different running duration (in other words, the first DRX and the second DRX have different on duration). For example, as shown in 7A, duration of a DRX on duration timer-1 (drx-onDurationTimer -1) is greater than that of a DRX on-duration timer-2 (drx-onDurationTimer -2).

It should be understood that different active time of different DRXs is configured herein includes that start moments and/or end moments of the active time are different. For example, active time of different DRXs partially overlaps or does not overlap.

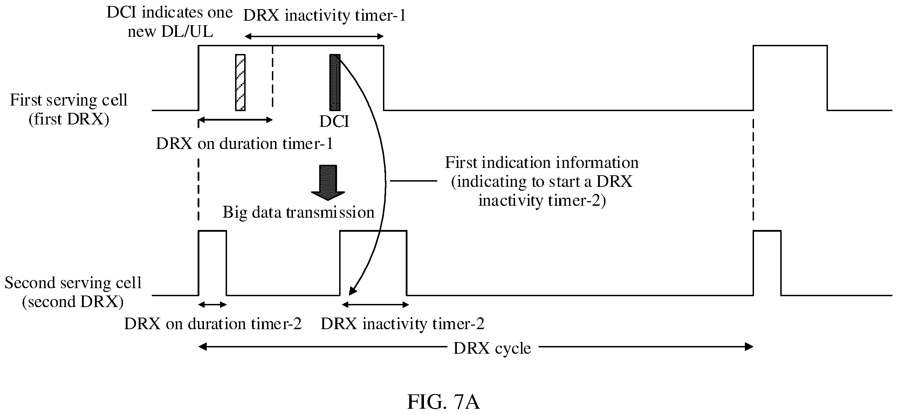

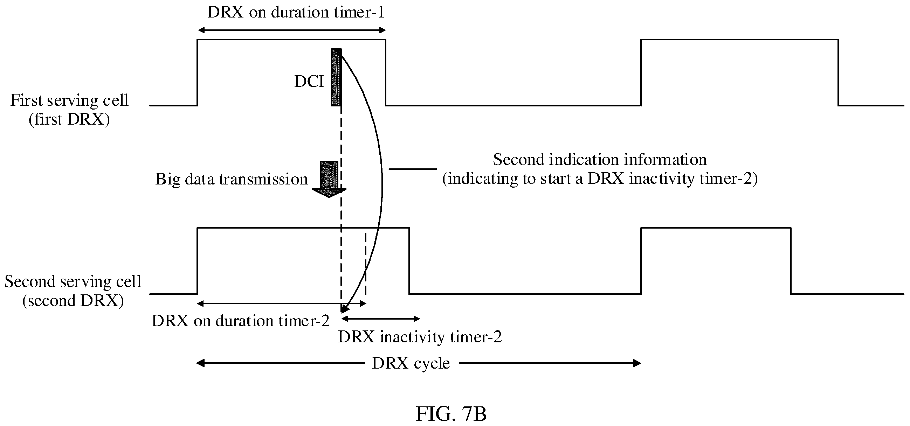

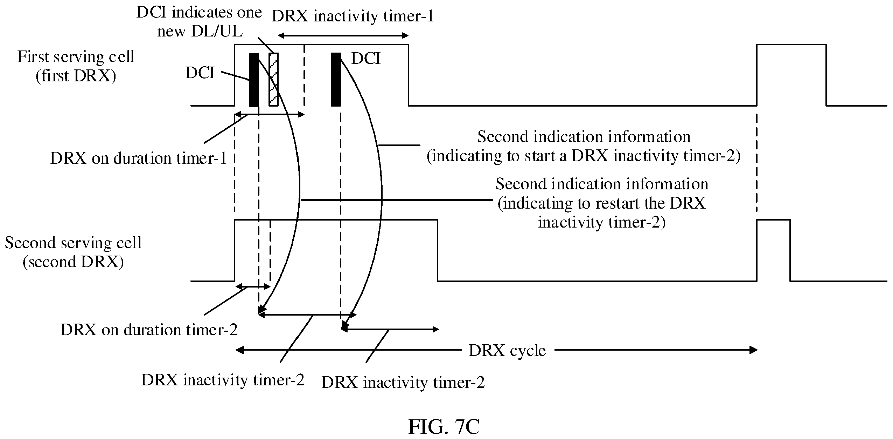

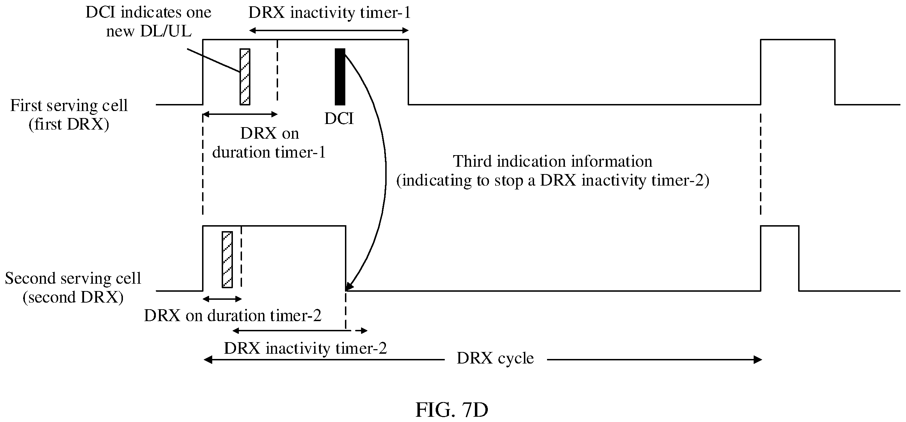

For example, refer to FIG. 7A, FIG. 7B, FIG. 7C, or FIG. 7D. A terminal device is configured with two DRXs, the two DRXs have a same DRX cycle, and on duration of the two DRXs in each cycle has a same start moment (in other words, a start moment of drx-onDurationTimer -1 is the same as that of drx-onDurationTimer -2), but different end moments (in other words, an end moment of drx-onDurationTimer -1 is different from that of drx-onDurationTimer -2).

For example, drx-onDurationTimer of different DRXs may also be configured with a same value. In this case, when no data is transmitted, active time of different DRXs is duration corresponding to the DRX, and duration of different DRXs is the same. It may be considered that the active time of different DRXs partially overlaps. When data is transmitted, data sizes and data arrival moments in serving cells corresponding to different DRXs are different. Therefore, drx-InactivityTimer of different DRXs has different start/end moments. In this case, active time of different DRXs has different end moments.

It should be understood that serving cells configured with the same DRX (in other words, located in a same DRX group) have a same DRX active time. When DRX active time of one serving cell is described, meaning of the DRX active time is to describe a DRX active time of a DRX configured for the serving cell. When a DRX status of a serving cell changes (for example, a DRX active time is started/prolonged/ended), there is a same change in a DRX status of the DRX configured for the serving cell, and there is also a same change in DRX statuses of other serving cells configured with the same DRX as the serving cell.

In a possible design, a value of a timer drx-onDurationTimer of DRX and/or a value of a timer drx-InactivityTimer of a DRX corresponding to a serving cell of a low frequency component carrier are greater than a value of a timer of a DRX corresponding to a serving cell of a high frequency component carrier. For example, a value of a timer drx-onDurationTimer and/or a value of a timer drx-InactivityTimer of a DRX corresponding to a serving cell whose component carrier frequency range is FR1 are greater than a value of a timer corresponding to a DRX corresponding to a serving cell whose component carrier frequency range is FR2. Because a system consumes higher power in a high frequency band, corresponding DRX active time may be shortened by lowering the value of the timer drx-onDurationTimer and/or the timer drx-InactivityTimer of the high frequency band, so that power consumption of a DRX corresponding to a serving cell of the high frequency band can be reduced. In addition, a network device can send indication information by using the first DRX, to flexibly control to start, prolong, or end active time of the second DRX, to meet a data transmission requirement, reduce a data delay, and improve a system throughput.

It should be understood that values of drx-onDurationTimer and/or drx-InactivityTimer corresponding to different DRXs are not limited in this application, and drx-onDurationTimer and/or drx-InactivityTimer corresponding to different DRXs may be configured with the same or different values. For example, drx-onDurationTimer and/or drx-InactivityTimer of the DRX corresponding to the serving cell whose component carrier frequency band is the FR2 may also be configured with same values as a corresponding timer corresponding to the serving cell whose component carrier frequency band is the FR1.

In embodiments of this application, the indication information may have at least one of the following functions:
(1) indicating the terminal device to start DRX active time of a second serving cell;
(2) indicating the terminal device to prolong DRX active time of a second serving cell; and
(3) indicating the terminal device to end DRX active time of a second serving cell.

It should be understood that when the network device actually sends the indication information, the indication information indicates one of the functions, for example, indicates the terminal device to start, prolong, or end the DRX active time of the second serving cell of the terminal device.

It should be understood that the functions of the indication information sent by the network device may be predefined in a protocol, or may be configured or indicated by the network device.

Specific implementations of the three functions of the indication information are separately described in detail below.

Manner 1: The indication information indicates the terminal device to start the DRX active time of the second serving cell of the terminal device.

As shown in FIG. 7A, the network device may send first indication information in a first serving cell in DRX inactive time of the second serving cell, to indicate the terminal device to start a DRX inactivity timer corresponding to the second DRX (drx-InactivityTimer-2). Correspondingly, the terminal device receives the first indication information in the first serving cell in DRX inactive time of the second serving cell. The terminal device starts the DRX inactivity timer corresponding to the second DRX in the DRX inactive time of the second serving cell based on the first indication information, to end the DRX inactive time of the second serving cell and start the DRX active time of the second serving cell.

With reference to FIG. 7A, a specific implementation procedure of the manner 1 may include the following several steps.

Step 1: The network device sends first configuration information and second configuration information, and the terminal device receives the first configuration information and the second configuration information.

The first configuration information includes first DRX configuration information and second DRX configuration information, the first DRX configuration information is used to configure a DRX inactivity timer of the first DRX, and the second DRX configuration information is used to configure a DRX inactivity timer of second DRX.

It should be understood that the first DRX configuration information may be further used to configure another DRX parameter other than the DRX inactivity timer of the first DRX, and the second DRX configuration information may be further used to configure another DRX parameter other than the DRX inactivity timer of the second DRX.

The second configuration information is used to configure a first cell to be in a first DRX group, and configure a second cell to be in a second DRX group. Optionally, the network device may configure a group identifier of the first DRX group for the first cell, and configure a group identifier of the second DRX group for the second cell.

It should be understood that the first DRX group (or the group identifier of the first DRX group) is associated with the first DRX configuration information, and the second DRX group (or the group identifier of the second DRX group) is associated with the second DRX configuration information. Configuring the first cell in the first DRX group means configuring the first DRX for the first cell, and configuring the second cell in the second DRX group means configuring the second DRX for the second cell.

Correspondingly, the terminal device configures the DRX inactivity timer of the first DRX and the DRX inactivity timer of the second DRX based on the first configuration information, and configures the first cell in the first DRX group and the second cell in the second DRX group based on the second configuration information.

Optionally, the terminal device may configure the group identifier of the first DRX group for the first cell, to configure the first cell in the first DRX group, and configure the group identifier of the second DRX group for the second cell, to configure the second cell in the second DRX group.

Step 2: When the first DRX group is in DRX active time and the second DRX group is in DRX inactive time, the network device sends the first indication information in the first cell, and the terminal device receives the first indication information in the first cell.

The first indication information indicates the terminal device to start the DRX inactivity timer of the second DRX in the second DRX group.

Step 3: The terminal device starts the DRX inactivity timer of second DRX, so that the terminal device starts to enter the DRX active time in the second DRX group.

Optionally, if the terminal device receives a physical downlink control channel PDCCH used to indicate new data transmission in any serving cell configured with the second DRX in the DRX active time of the second serving cell, the terminal device may start or restart the DRX inactivity timer corresponding to the second DRX, to prolong active time of the second DRX.

It should be understood that when the terminal device is in the DRX active time of the second serving cell, the network device does not need to send the first indication information in the first serving cell, and only needs to send, in any serving cell that is configured with the second DRX, a physical downlink control channel PDCCH used to indicate new data transmission. In this way, the DRX active time of the second DRX of the terminal device can be prolonged.

In addition, if the terminal device receives a physical downlink control channel PDCCH used to indicate new data transmission in any serving cell configured with the first DRX in DRX active time of the first serving cell, the terminal device starts or restarts the DRX inactivity timer corresponding to the first DRX, to prolong DRX active time of the first DRX.

Manner 2: The indication information indicates the terminal device to prolong the DRX active time of the second serving cell of the terminal device.

Specifically, the network device may send second indication information in a first serving cell in the DRX active time of the second serving cell, to indicate the terminal device to start or restart a DRX inactivity timer corresponding to the second DRX (drx-InactivityTimer-2). Correspondingly, the terminal device receives the second indication information in the first serving cell in DRX active time of the second serving cell. The terminal device starts or restarts the DRX inactivity timer corresponding to the second DRX in the DRX active time of the second serving cell based on the second indication information, to prolong the DRX active time of the second serving cell.

More specifically, both the first serving cell and the second serving cell (or a first DRX group and a second DRX group) are located in DRX active time. In this case, when the terminal device receives the second indication information, if drx-InactivityTimer-2 does not run, the terminal device starts drx-InactivityTimer-2, as shown in FIG. 7B, if drx-InactivityTimer-2 runs, the terminal device restarts drx-InactivityTimer-2, as shown in FIG. 7C.

In this case, the terminal device no longer determines, in the second DRX group based on whether a PDCCH indicating new transmission is received, whether to start or restart drx-InactivityTimer-2. Even if the UE receives, in a serving cell of the second DRX group, the PDCCH indicating new transmission, but does not receive the second indication information indicating the terminal to start/restart drx-InactivityTimer-2, the terminal does not start/restart drx-InactivityTimer-2.

With reference to FIG. 7B and FIG. 7C, a specific implementation procedure of the manner 2 may include the following several steps.

Step 1: The network device sends first configuration information and second configuration information, and the terminal device receives the first configuration information and the second configuration information. Correspondingly, the terminal device configures the DRX inactivity timer of the first DRX and the DRX inactivity timer of the second DRX based on the first configuration information, and configures the first cell in the first DRX group and the second cell in the second DRX group based on the second configuration information.

For a specific implementation of step 1 herein, refer to the specific implementation of step 1 in the manner 1. Details are not described herein again.

Step 2: When the first DRX group and the second DRX group are both in DRX active time, the network device sends the second indication information in the first cell, and the terminal device receives the second indication information in the first cell.

Step 3: The terminal device starts or restarts the DRX inactivity timer of second DRX based on the second indication information, so that the terminal device prolongs the DRX active time of the second serving cell.

It should be understood that the manner 1 and the manner 2 may be implemented in combination with each other. In a case that the manner 1 and the manner 2 are implemented in combination, when the first DRX group is in DRX active time and the second DRX group is in DRX inactive time, the terminal device starts the DRX inactivity timer of the second DRX based on the first indication information, to start active time of the second DRX group; if the first DRX group and the second DRX group are both in DRX active time, the terminal device starts/restarts the DRX inactivity timer of the second DRX based on the second indication information, to prolong active time of the second DRX group.

Similarly, if the terminal device receives a physical downlink control channel PDCCH used to indicate new data transmission in any serving cell configured with the first DRX in DRX active time of the first serving cell, the terminal device starts or restarts the DRX inactivity timer corresponding to the first DRX.

Optionally, the first indication information and the second indication information may actually be same indication information, and the terminal device may allow the same indication information based on different time moments of receiving the indication information (that is, the terminal device receives the indication information in inactive time or active time of the second DRX) to implement different indication functions (the former may start the active time of the second DRX, and the latter may prolong the active time of the second DRX).

Manner 3: The indication information indicates the terminal device to end the DRX active time of the second serving cell of the terminal device.

As shown in FIG. 7D, the network device may send third indication information in a first serving cell in DRX active time of the second serving cell, to indicate the terminal device to stop a DRX inactivity timer corresponding to the second DRX (drx-InactivityTimer-2). Correspondingly, the terminal device receives the third indication information in the first serving cell in the DRX active time of the second serving cell. The terminal device stops the DRX inactivity timer corresponding to the second DRX in the DRX active time of the second serving cell based on the third indication information, to end the DRX active time of the second serving cell and start DRX inactive time of the second serving cell.

With reference to FIG. 7D, a specific implementation procedure of the manner 3 may include the following several steps.

Step 1: The network device sends first configuration information and second configuration information, and the terminal device receives the first configuration information and the second configuration information. Correspondingly, the terminal device configures the DRX inactivity timer of the first DRX and the DRX inactivity timer of the second DRX based on the first configuration information, and configures the first cell in the first DRX group and the second cell in the second DRX group based on the second configuration information.

For a specific implementation of step 1 herein, refer to the specific implementation of step 1 in the manner 1. Details are not described herein again.

Step 2: When the first DRX group and the second DRX group are both in DRX active time, and the DRX inactivity timer of second DRX is running, the network device sends the third indication information in the first cell, and the terminal device receives the third indication information in the first cell.

Step 3: The terminal device stops the DRX inactivity timer of second DRX based on the third indication information, so that the terminal device ends the DRX active time of the second serving cell and enters the DRX inactive time.

Optionally, the third indication information may further indicate the terminal device to stop a DRX on duration timer (drx-onDurationTimer-2) corresponding to the second DRX.

It should be understood that the manner 3 may be implemented in combination with the manner 1 (that is, the manner 1 is used to start drx-InactivityTimer-2, and the manner 3 is used to stop drx-InactivityTimer-2), implemented in combination with the manner 2 (that is, the manner 2 is used to start/restart drx-InactivityTimer-2, and the manner 3 is used to stop drx-InactivityTimer-2), or implemented in combination with the manner 1 and the manner 2 (that is, the manner 1 and the manner 2 are used to start/restart drx-InactivityTimer-2, and the manner 3 is used to stop drx-InactivityTimer-2). This is not limited herein.

Optionally, the third indication information and the first/second indication information may be implemented by using different statuses of same indication information (referred to as fourth indication information herein for ease of description).

Example 1: The terminal device receives the fourth indication information in the first cell, and when the fourth indication information is set to a first status and the second DRX group is in DRX inactive time, the terminal device starts drx-InactivityTimer-2 in the second DRX group. When the fourth indication information is set to a second status and the second DRX group is in DRX active time, the terminal device stops drx-InactivityTimer-2 in the second DRX group. When the terminal device is in DRX active time in the first cell, if the terminal device receives, in any serving cell in the first DRX group, a PDCCH indicating new transmission, the terminal device starts or restarts drx-InactivityTimer-1.

Example 2: The terminal device receives the fourth indication information in the first cell, and when the fourth indication information is set to a first status and the second DRX group is in DRX active time, the terminal device starts or restarts drx-InactivityTimer-2 in the second DRX group. When the fourth indication information is set to a second status and the second DRX group is in DRX active time, the terminal device stops the DRX inactivity timer of the second DRX. When the terminal device is in DRX active time in the first cell, if the terminal device receives, in any serving cell in the first DRX group, a PDCCH indicating new transmission, the terminal device starts or restarts the DRX inactivity timer of the first DRX (drx-InactivityTimer-1).

In a possible design, different statuses of the fourth indication information are implemented by using different values of a same information bit. For example, the fourth indication information is specifically a first bit in DCI. When a value of the first bit is 0 (or 1), it indicates that the fourth indication information is set to the first status. When a value of the first bit is 1 (or 0), it indicates that the fourth indication information is set to the second status.

It should be understood that the third indication information and the first/second indication information may alternatively be implemented by using different indication information. For example, the first/second indication information is carried in the DCI, and the third indication information is carried in a PDSCH.

In a possible implementation of this application, the network device may indicate a DRX status of another DRX serving cell of the terminal device by sending indication information in any DRX serving cell of the terminal device.

In this case, the first serving cell may be a primary serving cell of the terminal device, and the second serving cell may be a secondary serving cell of the terminal device. Alternatively, the first serving cell may be a secondary serving cell of the terminal device, and the second serving cell may be a primary serving cell of the terminal device. Alternatively, both the first serving cell and the second serving cell may be secondary serving cells of the terminal device.

Optionally, cells in different DRX groups (in other words, serving cells configured with different DRXs) may send indication information to each other, to control DRX status switching of each other.

For example, after performing S602, the terminal device may further receive indication information sent by the network device in a third serving cell of the terminal device. The indication information sent by the network device in the third serving cell indicates the terminal device to start, prolong, or end DRX active time of the first serving cell of the terminal device. The terminal device starts, prolongs, or ends the DRX active time of the first serving cell based on the indication information sent by the network device in the third serving cell. The third serving cell may be configured with the second DRX. The third serving cell and the second serving cell may be a same cell or different cells. This is not limited.

Specific one or more serving cells, in one DRX group, in which the network device sends the indication information may be predefined in a protocol, or indicated by configuration signaling or indication signaling sent by the network device.

In another possible implementation of this application, the network device may indicate DRX statuses of one or more secondary serving cells of the terminal device by sending indication information in a primary serving cell of the terminal device, but cannot indicate a DRX status of the primary serving cell by sending indication information in the secondary serving cell. In this case, the first serving cell is a primary serving cell of the terminal device, and the second serving cell is a secondary serving cell of the terminal device.

In another possible implementation of this application, the network device may send indication information in one or more cells in one DRX group of the terminal device, to indicate to start, prolong, or end active time corresponding to all other DRX groups. For example, the indication information sent by the network device in the first serving cell may indicate the terminal device to start, prolong, or end DRX active time of a serving cell corresponding to another DRX in the at least two DRXs other than the first DRX. The another DRX includes the second DRX.

For example, the network device configures the first DRX for the first cell, the second DRX for the second cell, and a third DRX for a third cell. The network device sends fifth indication information in the first cell. The fifth indication information indicates the terminal device to start, prolong, or end DRX active time in the second cell, and also indicates the terminal device to start, prolong, or end DRX active time in the third cell.

A specific DRX group and specific one or more serving cells in one DRX group, in which the network device sends the indication information may be predefined in a protocol, or indicated by configuration signaling or indication signaling sent by the network device.

Optionally, the indication information involved in embodiments of this application may include a start moment at which the terminal device starts, prolongs, or ends the DRX active time of the second serving cell.

For example, the indication information includes a start/restart/stop moment of drx-InactivityTimer-2, and the moment may be a specific symbol, slot, subframe, or the like.

Optionally, the start moment at which the terminal device starts, prolongs, or ends the DRX active time of the second serving cell may also be predefined in a protocol.

For example, the terminal device starts or restarts the timer drx-InactivityTimer-2 after a first OFDM symbol or a start moment (or a start OFDM symbol) of a next slot after the first/second indication information is received, or a start moment (or a start OFDM symbol) of a slot in which the first/second indication information is located, or an end moment (or an end OFDM symbol) of a slot in which the first/second indication information is located, or a period of time after the first/second indication information is received. The terminal device stops the timer drx-InactivityTimer-2 after a first OFDM symbol or a start moment (or a start OFDM symbol) of a next slot after the third indication information is received, or a start moment (or a start OFDM symbol) of a slot in which the third indication information is located, or an end moment (or an end OFDM symbol) of a slot in which the third indication information is located, or a period of time after the third indication information is received.

Optionally, the indication information involved in embodiments of this application may be carried in the PDCCH (for example, the DCI), or carried in the PDSCH (for example, MAC CE signaling). This is not limited herein.

When the indication information is carried in the DCI, the DCI that carries the indication information may be scheduling DCI or non-scheduling DCI. This is not limited herein.

Optionally, the indication information involved in embodiments of this application may include one or more information bits. The information bit may be a reserved bit in an existing DCI format (DCI format), or a new bit added to an existing DCI format, or may be one or more information fields that reinterpret an existing DCI format. This is not limited herein.

Optionally, a cyclic redundancy check (Cyclic Redundancy Check, CRC) of the DCI that carries the indication information may be scrambled by using a plurality of radio network temporary identifiers (Radio Network Temporary Identifiers, RNTIs). For example, the cyclic redundancy check may include one or more of the following several RNTIs: a cell radio network temporary identifier (cell RNTI, C-RNTI). a modulation and coding scheme radio network temporary identifier (modulation and coding scheme-RNTI, MCS-RNTI), a configured scheduling radio network temporary identifier (Configured Scheduling RNTI, CS-RNTI), and a slot format indication radio network temporary identifier (Slot Format Indication RNTI, SFI-RNTI).

Optionally, the indication information involved in embodiments of this application may be configured by a network, or may be specified in a protocol. This is not limited herein.

The following describes possible specific implementations in which the indication information is carried in the DCI.

### Implementation 1:

The implementation 1 is performed for the first indication information in the manner 1, that is, the first indication information indicates the terminal device to transit to the DRX active time from the DRX inactive time in the second serving cell.

The network device may send a secondary cell dormancy indication (SCell dormancy indication) in the primary serving cell (PCell). The dormancy indication indicates the terminal device to switch between a dormant bandwidth part (dormant bandwidth part, dormant BWP) and a non-dormant BWP (non-dormant BWP) in the SCell. In the DRX active time, a DCI format 0_1 and/or a DCI format 1_1 sent by the network device may include the dormancy indication. Both the scheduling DCI and the non-scheduling DCI may carry the dormancy indication. For example, when the scheduling DCI carries the dormancy indication, the DCI format 0_1 and/or the DCI format 1_1 may schedule data (for example, a physical uplink shared channel (physical uplink shared channel, PUSCH) or the PDSCH), and carry the dormancy indication. When the non-scheduling DCI carries the dormancy indication, the DCI format 1_1 carries the dormancy indication and does not schedule the PDSCH, and the DCI format 0_1 does not carry the dormancy indication. A PDCCH that schedules the data and carries the dormancy indication is referred to as a case 1 PDCCH, and a PDCCH that carries the dormancy indication but does not schedule the data is referred to as a case 2 PDCCH.

Whether the scheduling DCI carries the dormancy indication may be configured by the network device. If the network device configures one or more secondary cell groups, the scheduling DCI carries the dormancy indication. The dormancy indication is represented by a bitmap in one piece of scheduling DCI. A quantity of bits of the bitmap is equal to a quantity of configured secondary cell groups. In addition, each bit of the bitmap is in a one-to-one correspondence with the configured secondary cell group. If a bit is set to 0, it indicates that a secondary cell in a corresponding secondary cell group stays in a dormant BWP or switches to a dormant BWP. If a bit is set to 1, it indicates that a secondary cell in a corresponding secondary cell group stays in a current non-dormant BWP or switches from a dormant BWP to a non-dormant BWP.

If the terminal device detects the DCI format 1_1, a CRC of the DCI is scrambled by using a C-RNTI or an MCS-RNTI, and a frequency domain resource assignment field (frequency domain resource assignment field, FDRA field) in the DCI is set to all 0s (for a resource allocation manner of a resource allocation type 0 or a dynamically switched resource allocation manner) or all 1s (for a resource allocation manner of a resource allocation type 1 or a dynamically switched resource allocation manner), the DCI is non-scheduling DCI that carries the dormancy indication. The DCI includes one bitmap, and bits in the bitmap are in a one-to-one correspondence with configured secondary cells based on a specific sequence. If a bit is set to 0, it indicates that a corresponding secondary cell stays in a dormant BWP or switches to a dormant BWP. If a bit is set to 1, it indicates that a corresponding secondary cell stays in a current non-dormant BWP or switches from a dormant BWP to a non-dormant BWP.

In this manner, the first serving cell is the primary serving cell (PCell) and is configured with the first DRX. The second serving cell is a secondary serving cell and is configured with the second DRX. A serving cell configured with the second DRX may also include another secondary serving cell other than the second serving cell.

It should be understood that when the serving cell configured with the second DRX is configured to be in one secondary cell group, the network device may send the dormancy indication to the serving cell in the case 1 PDCCH. When none of the serving cells configured with the second DRX is configured to be in any secondary cell group, DCI that is of the case 1 PDCCH and that is sent by the network device does not include a dormancy indication for the serving cell configured with the second DRX. However, the case 2 PDCCH includes the dormancy indication for the serving cell configured with the second DRX.

When the first DRX group is at DRX active time and the second DRX group is at DRX inactive time, one or more information bits in a dormancy indication information field of a serving cell corresponding to the second DRX group in DCI of the case 1 PDCCH and/or the case 2 PDCCH are used to carry the first indication information. When the one or more information bits are set to the first status, it indicates to start drx-InactivityTimer-2 of the second DRX group. When the one or more information bits are set to the second status, it indicates not to start drx-InactivityTimer-2 of the second DRX group.

If the one or more information bits are set to the first status, it indicates to start drx-InactivityTimer-2 of the second DRX group. In this case, if one or more secondary serving cells corresponding to the one or more information bits are currently in the dominant BWP, the secondary serving cells are switched from the dormant BWP to the non-dormant BWP, for example, switched to the non-dormant BWP specified by the network device by using configuration information. If the secondary serving cells are currently located in the non-dormant BWP, the secondary serving cells continue to stay in the current non-dormant BWP or are switched to another non-dormant BWP, for example, switched to a non-dormant BWP specified by the network device by using configuration information. Optionally, a dormancy indication information bit of the serving cell corresponding to the second DRX group in the DCI of the case 1 PDCCH and/or the case 2 PDCCH, other than the one or more information bits, may still indicate a dormant behavior of the corresponding secondary cell according to the rule, in other words, whether switching between the dormant BWP and the non-dormant BWP.

It should be understood that a dormancy indication information field of a serving cell corresponding to the first DRX group in the DCI of the PDCCH in the case 1 PDCCH and/or the case 2 PDCCH is still used to indicate a dormancy behavior of the corresponding secondary cell.

If the one or more information bits are set to the second status, it indicates not to start drx-InactivityTimer-2 of the second DRX group. In this case, the serving cell in the second DRX group may stay in the current BWP, or is switched to the dormant BWP (if the serving cell is currently in the dormant BWP, the serving cell continues to stay in the dormant BWP).

When the first DRX group and the second DRX group are both at DRX active time, the dormancy indication information field of the serving cell corresponding to the second DRX group in the DCI of the case 1 PDCCH and/or the case 2 PDCCH is still used to indicate a dormant behavior of the corresponding secondary cell according to the rule, in other words, indicate whether switching between the dormant BWP and the non-dormant BWP.

For one or more specific information bits that are in the case 1 PDCCH and/or the case 2 PDCCH and that are used to indicate the first indication information may be configured or indicated by the network device, or may be predefined in a protocol. For example, a specific rule is predefined in the protocol to determine the one or more information bits.

For example, for the case 1 PDCCH, if only one secondary cell group is configured for the serving cell in the second DRX group, a dormancy indication information bit in DCI corresponding to the secondary cell group is used to carry the first indication information. If a plurality of secondary cell groups are configured for the serving cell in the second DRX group, a dormancy indication information bit corresponding to a secondary cell group with a largest or smallest secondary cell group number in the plurality of secondary cell groups configured for the serving cell in the second DRX group is used to carry the first indication information. For the case 2 PDCCH, a dormancy indication information bit corresponding to a secondary cell group with a largest or smallest secondary cell group number in the serving cell corresponding to the second DRX group in one or more dormancy indication information fields of the serving cell corresponding to the second DRX group in the DCI of the case 2 PDCCH is used to carry the first indication information.

In this implementation, a specific PDCCH carrying the first indication information may be configured or indicated by the network device, or pre-specified in a protocol. For example, only the case 1 PDCCH carries the first indication information, or only the case 2 PDCCH carries the first indication information, or both the case 1 PDCCH and the case 2 PDCCH carry the first indication information.

### Implementation 2:

In this implementation, the primary serving cell PCell is configured with the first DRX, and if the network device configures the second DRX, a dormancy indication function is not configured or activated for the serving cell configured with the second DRX. For example, the serving cell configured with the second DRX is not configured to be in any secondary cell group. In addition, as configured by the network device or specified in a protocol, DCI of a case 2 PDCCH does not include a dormancy indication bit for the serving cell in the second DRX group. In other words, a dormant BWP is not configured for the serving cell configured with the second DRX. Whether the dormancy indication function is configured for the serving cell configured with the first DRX is not limited in this application.

For specific implementations of the first/second/third indication information, refer to the foregoing descriptions. Details are not described herein again.

The implementations of embodiments of this application may be combined with each other to achieve different technical effects.

It can be learned from the foregoing that the network device in embodiments of this application may indicate a DRX status of another DRX (in other words, indicate across DRX groups or across carriers) based on one DRX, to more flexibly control DRX statuses of the terminal device in different DRXs (or different component carriers). In this way, when data arrives, another DRX may transit to the DRX active time to monitor the PDCCH, to improve a throughput of the terminal device and reduce a data delay; when there is no data, another DRX may maintain or transit to DRX inactive time, so that the terminal device may turn off a radio frequency chain corresponding to the another DRX, reducing power consumption.

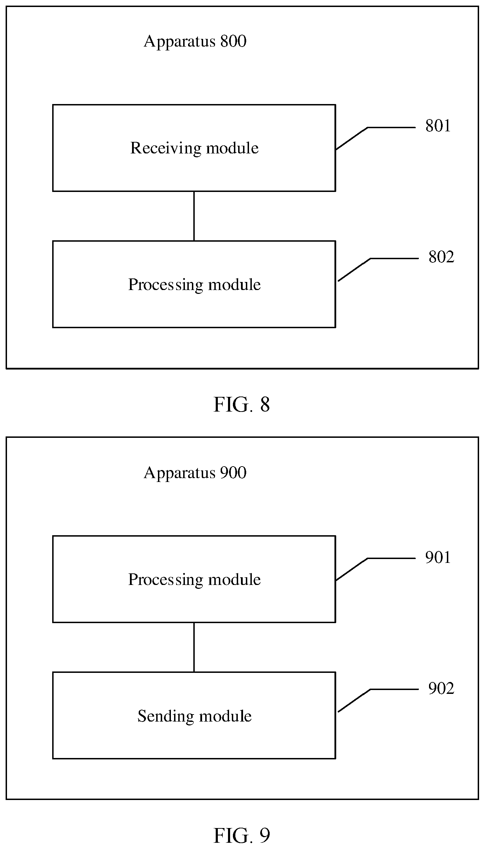

The methods provided in embodiments of this application are described above in detail with reference to FIG. 6 to FIG. 7D. Apparatuses provided in embodiments of this application are described below in detail with reference to FIG. 8 to FIG. 10.

Based on a same technical concept, an embodiment of this application further provides a DRX control apparatus 800. The apparatus 800 may be a terminal device or an apparatus 800 in a terminal device. The apparatus 800 includes a module configured to perform the method shown in FIG. 6. For example, refer to FIG. 8. The apparatus 800 may include the following modules.

A receiving module 801 is configured to receive indication information sent by a network device in a first serving cell of the apparatus 800. The indication information indicates the apparatus 800 to start, prolong, or end DRX active time of a second serving cell of the apparatus 800. The first serving cell is configured with a first DRX, and the second serving cell is configured with a second DRX. Active time of a serving cell configured with the first DRX is different from active time of a serving cell configured with the second DRX.

A processing module 802 is configured to start, prolong, or end the DRX active time of the second serving cell based on the indication information.

In a possible design, the receiving module 801 is specifically configured to:
receive first indication information in the first serving cell in DRX inactive time of the second serving cell, where the first indication information indicates the apparatus 800 to start a DRX inactivity timer corresponding to the second DRX.

The processing module 802 is specifically configured to: start the DRX inactivity timer corresponding to the second DRX in the DRX inactive time of the second serving cell based on the first indication information, to end the DRX inactive time of the second serving cell, and start the DRX active time of the second serving cell.

In a possible design, the receiving module 801 is further configured to:
receive a physical downlink control channel PDCCH used to indicate new data transmission in any serving cell configured with the second DRX in the DRX active time of the second serving cell.

The processing module 802 is further configured to:
start or restart the DRX inactivity timer corresponding to the second DRX.

In a possible design, the receiving module 801 is specifically configured to:
receive second indication information in the first serving cell in DRX active time of the second serving cell, where the second indication information indicates the apparatus 800 to start or restart a DRX inactivity timer corresponding to the second DRX.

The processing module 802 is specifically configured to:
start or restart the DRX inactivity timer corresponding to the second DRX in the DRX active time of the second serving cell based on the second indication information, to prolong the DRX active time of the second serving cell.

In a possible design, the receiving module 801 is specifically configured to:
receive third indication information in the first serving cell in the DRX active time of the second serving cell, where the third indication information indicates the apparatus 800 to stop a DRX inactivity timer corresponding to the second DRX.

The processing module 802 is specifically configured to:
stop the DRX inactivity timer corresponding to the second DRX in the DRX active time of the second serving cell based on the third indication information, to end the DRX active time of the second serving cell, and start the DRX inactive time of the second serving cell.

In a possible design, the receiving module 801 is further configured to:
receive indication information sent by the network device in a third serving cell of the apparatus 800, where the indication information sent by the network device in the third serving cell indicates the apparatus 800 to start, prolong, or end DRX active time of the first serving cell of the apparatus 800, and the third serving cell is configured with the second DRX.

The processing module 802 is further configured to:
start, prolong, or end the DRX active time of the first serving cell based on the indication information sent by the network device in the third serving cell.

In a possible design, the first serving cell is a primary serving cell of the apparatus 800, and the second serving cell is a secondary serving cell of the apparatus 800. Alternatively, both the first serving cell and the second serving cell are secondary serving cells of the apparatus 800.

In a possible design, the network device is configured with at least two DRXs. The at least two DRXs include the first DRX and the second DRX. The indication information sent by the network device in the first serving cell indicates the apparatus 800 to start, prolong, or end DRX active time of a serving cell corresponding to another DRX in the at least two DRXs other than the first DRX. The another DRX includes the second DRX.

In a possible design, the indication information sent by the network device in the first serving cell includes a start moment at which the apparatus 800 starts, prolongs, or ends the DRX active time of the second serving cell.

In a possible design, the indication information sent by the network device in the first serving cell is carried in downlink control information DCI or a physical downlink shared channel PDSCH.

Based on a same technical concept, an embodiment of this application further provides a DRX control apparatus 900. The apparatus 900 may be a network device or an apparatus 900 in a network device. The apparatus 900 includes a module configured to perform the method shown in FIG. 6. For example, refer to FIG. 9. The apparatus 900 may include the following modules.

A processing module 901 is configured to obtain indication information. The apparatus indication information indicates a terminal device to start, prolong, or end DRX active time of a second serving cell of the terminal device. The apparatus second serving cell is configured with a second DRX; and

A sending module 902 is configured to send indication information in a first serving cell of the terminal device. The first serving cell is configured with a first DRX. Active time of a serving cell that is configured with the first DRX is different from active time of a serving cell that is configured with the second DRX.

In a possible design, the sending module 902 is specifically configured to:
send first indication information in the first serving cell in DRX inactive time of the second serving cell. The first indication information indicates the terminal device to start a DRX inactivity timer corresponding to the second DRX.

In a possible design, the sending module 902 is further configured to:
send a physical downlink control channel PDCCH used to indicate new data transmission in any serving cell configured with the second DRX in the DRX active time of the second serving cell.

In a possible design, the sending module 902 is specifically configured to:
send second indication information in the first serving cell in the DRX active time of the second serving cell. The second indication information indicates the terminal device to start or restart the DRX inactivity timer corresponding to the second DRX.

In a possible design, the sending module 902 is specifically configured to:
send third indication information in the first serving cell in the DRX active time of the second serving cell. The third indication information indicates the terminal device to stop the DRX inactivity timer corresponding to the second DRX.

In a possible design, the sending module 902 is further configured to:
send indication information in a third serving cell of the terminal device, to indicate the terminal device to start, prolong, or end DRX active time of the first serving cell of the terminal device. The third serving cell is configured with the second DRX.

In a possible design, the first serving cell is a primary serving cell of the terminal device, and the second serving cell is a secondary serving cell of the terminal device. Alternatively, both the first serving cell and the second serving cell are secondary serving cells of the terminal device.

In a possible design, the apparatus 900 is configured with at least two DRXs. The at least two DRXs include the first DRX and the second DRX. The indication information sent by the apparatus 900 in the first serving cell indicates the terminal device to start, prolong, or end DRX active time of a serving cell corresponding to another DRX in the at least two DRXs other than the first DRX. The another DRX includes the second DRX.

In a possible design, the indication information sent by the apparatus 900 in the first serving cell includes a start moment at which the terminal device starts, prolongs, or ends the DRX active time of the second serving cell.

In a possible design, the indication information sent by the apparatus 900 in the first serving cell is carried in downlink control information DCI or a physical downlink shared channel PDSCH.

Based on the same technical concept, with reference to FIG. 10, an embodiment of this application further provides a positioning integrity control apparatus 1000, including:
at least one processor 1001, and a communication interface 1003 that are communicatively connected to the at least one processor 1001.

The at least one processor 1001 executes an instruction stored in a memory 1002, so that the apparatus 1000 performs the method shown in FIG. 6.

Optionally, the memory 1002 is located outside the apparatus 1000.

Optionally, the apparatus 1000 includes the memory 1002. The memory 1002 is connected to the at least one processor 1001, and the memory 1002 stores the instruction that can be executed by the at least one processor 1001. In FIG. 10, a dashed line is used to indicate that the memory 1002 is optional for the apparatus 1000.

The processor 1001 and the memory 1002 may be coupled through an interface circuit, or may be integrated together. This is not limited herein.

A specific connection medium between the processor 1001, the memory 1002, and the communication interface 1003 is not limited in this embodiment of this application. In the embodiments of this application, the processor 1001, the memory 1002, and the communication interface 1003 are connected through a bus 1004 in FIG. 10. The bus is represented by a bold line in FIG. 10. The connection manner between other components is merely an example for description, and is not limited thereto. The bus may be classified into an address bus, a data bus, a control bus, and the like. For ease of representation, only one thick line is for representing the bus in FIG. 10, but this does not mean that there is only one bus or only one type of bus.

It should be understood that the processor mentioned in the embodiments of this application may be implemented by hardware or may be implemented by software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), or a field programmable gate array (Field Programmable Gate Array, FPGA) or another programmable logic device, a discrete gate or a transistor logic device, a discrete hardware component, or the like. The general-purpose processor may be a microprocessor, or the processor may be any conventional processor or the like.

It may be understood that the memory mentioned in the embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA, another programmable logic device, a discrete gate or a transistor logic device, or a discrete hardware component, the memory (storage module) may be integrated into the processor.

It should be noted that the memory described in this specification is intended to include but not limited to these memories and any memory of another proper type.

Based on a same technical concept, an embodiment of this application further provides a computer-readable storage medium, including a program or instructions. When the program or the instructions are run on a computer, the method shown in FIG. 6 is performed.

Based on the same technical concept, an embodiment of this application further provides a chip. The chip is coupled to a memory, and is configured to read and execute program instructions stored in the memory, so that the method shown in FIG. 6 is performed.

Based on the same technical concept, an embodiment of this application further provides a computer program product, including instructions. When the computer program product runs on a computer, the method shown in FIG. 6 is performed.

Based on the same technical concept, an embodiment of this application further provides a communication system, including the terminal device and the network device in embodiments of this application.

It should be understood that all related content of the steps in the foregoing method embodiments may be cited in function descriptions of the corresponding functional modules. Details are not described herein again.

Embodiments of this application are described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD), a semiconductor medium (for example, a solid-state drive (solid state disk, SSD)), or the like.

Clearly, a person skilled in the art can make various modifications and variations to embodiments of this application without departing from the spirit and scope of this application. This application is intended to cover these modifications and variations provided that they fall within the scope of protection defined by the following claims and their equivalent technologies.

## Claims

1. A discontinuous reception DRX control method, comprising:
receiving, by a terminal device, indication information sent by a network device in a first serving cell of the terminal device, wherein the indication information indicates the terminal device to start, prolong, or end DRX active time of a second serving cell of the terminal device, the first serving cell is configured with a first DRX, the second serving cell is configured with a second DRX, and active time of a serving cell configured with the first DRX is different from active time of a serving cell configured with the second DRX; and
starting, prolonging, or ending, by the terminal device, the DRX active time of the second serving cell based on the indication information.

2. The method according to claim 1, wherein the receiving, by a terminal device, indication information sent by a network device in a first serving cell of the terminal device comprises:
receiving, by the terminal device, first indication information in the first serving cell in DRX inactive time of the second serving cell, wherein the first indication information indicates the terminal device to start a DRX inactivity timer corresponding to the second DRX; and
the starting, by the terminal device, the DRX active time of the second serving cell based on the indication information comprises:
starting, by the terminal device, the DRX inactivity timer corresponding to the second DRX in the DRX inactive time of the second serving cell based on the first indication information, to end the DRX inactive time of the second serving cell, and start the DRX active time of the second serving cell.

3. The method according to claim 2, wherein the method further comprises:
receiving, by the terminal device in any serving cell configured with the second DRX in the DRX active time of the second serving cell, a physical downlink control channel PDCCH used to indicate new data transmission; and starting or restarting, by the terminal device, the DRX inactivity timer corresponding to the second DRX.

4. The method according to claim 1 or 2, wherein the receiving, by a terminal device, indication information sent by a network device in a first serving cell of the terminal device comprises:
receiving, by the terminal device, second indication information in the first serving cell in the DRX active time of the second serving cell, wherein the second indication information indicates the terminal device to start or restart the DRX inactivity timer corresponding to the second DRX; and
the prolonging, by the terminal device, the DRX active time of the second serving cell based on the indication information comprises:
starting or restarting, by the terminal device, the DRX inactivity timer corresponding to the second DRX in the DRX active time of the second serving cell based on the second indication information, to prolong the DRX active time of the second serving cell.

5. The method according to any one of claims 1 to 4, wherein the receiving, by a terminal device, indication information sent by a network device in a first serving cell of the terminal device comprises:
receiving, by the terminal device, third indication information in the first serving cell in the DRX active time of the second serving cell, wherein the third indication information indicates the terminal device to stop the DRX inactivity timer corresponding to the second DRX; and
the ending, by the terminal device, the DRX active time of the second serving cell based on the indication information comprises:
stopping, by the terminal device, the DRX inactivity timer corresponding to the second DRX in the DRX active time of the second serving cell based on the third indication information, to end the DRX active time of the second serving cell, and start the DRX inactive time of the second serving cell.

6. The method according to any one of claims 1 to 5, wherein the method further comprises:
receiving, by the terminal device, indication information sent by the network device in a third serving cell of the terminal device, wherein the indication information sent by the network device in the third serving cell indicates the terminal device to start, prolong, or end DRX active time of the first serving cell of the terminal device, and the third serving cell is configured with the second DRX; and
starting, prolonging, or ending, by the terminal device, the DRX active time of the first serving cell based on the indication information sent by the network device in the third serving cell.

7. The method according to any one of claims 1 to 6, wherein
the first serving cell is a primary serving cell of the terminal device, and the second serving cell is a secondary serving cell of the terminal device; or
the first serving cell and the second serving cell are both secondary serving cells of the terminal device.

8. The method according to any one of claims 1 to 7, wherein the network device is configured with at least two DRXs, wherein the at least two DRXs comprise the first DRX and the second DRX; and
the indication information sent by the network device in the first serving cell indicates the terminal device to start, prolong, or end DRX active time of a serving cell corresponding to another DRX in the at least two DRXs other than the first DRX, wherein the another DRX comprises the second DRX.

9. The method according to any one of claims 1 to 8, wherein the indication information sent by the network device in the first serving cell comprises a start moment at which the terminal device starts, prolongs, or ends the DRX active time of the second serving cell.

10. The method according to any one of claims 1 to 9, wherein the indication information sent by the network device in the first serving cell is carried in downlink control information DCI or a physical downlink shared channel PDSCH.

11. A discontinuous reception DRX control method, comprising:
obtaining, by a network device, indication information, wherein the indication information indicates a terminal device to start, prolong, or end DRX active time of a second serving cell of the terminal device, wherein the second serving cell is configured with a second DRX; and
sending, by the network device, indication information in a first serving cell of the terminal device, wherein the first serving cell is configured with a first DRX, and active time of a serving cell configured with the first DRX is different from active time of a serving cell configured with the second DRX.

12. The method according to claim 11, wherein the sending, by the network device, indication information in a first serving cell of the terminal device comprises:
sending, by the network device, first indication information in the first serving cell in DRX inactive time of the second serving cell, wherein the first indication information indicates the terminal device to start a DRX inactivity timer corresponding to the second DRX.

13. The method according to claim 12, wherein the method further comprises:
sending, by the network device in any serving cell configured with the second DRX in the DRX active time of the second serving cell, a physical downlink control channel PDCCH used to indicate new data transmission.

14. The method according to claim 11 or 12, wherein the sending, by the network device, indication information in a first serving cell of the terminal device comprises:
sending, by the network device, second indication information in the first serving cell in the DRX active time of the second serving cell, wherein the second indication information indicates the terminal device to start or restart the DRX inactivity timer corresponding to the second DRX.

15. The method according to any one of claims 11 to 14, wherein the sending, by the network device, indication information in a first serving cell of the terminal device comprises:
sending, by the network device, third indication information in the first serving cell in the DRX active time of the second serving cell, wherein the third indication information indicates the terminal device to stop the DRX inactivity timer corresponding to the second DRX.

16. The method according to any one of claims 11 to 15, wherein the method further comprises:
sending, by the network device, indication information in a third serving cell of the terminal device, to indicate the terminal device to start, prolong, or end DRX active time of the first serving cell of the terminal device, wherein the third serving cell is configured with the second DRX.

17. The method according to any one of claims 11 to 16, wherein
the first serving cell is a primary serving cell of the terminal device, and the second serving cell is a secondary serving cell of the terminal device; or
the first serving cell and the second serving cell are both secondary serving cells of the terminal device.

18. The method according to any one of claims 11 to 17, wherein the network device is configured with at least two DRXs, wherein the at least two DRXs comprise the first DRX and the second DRX; and
the indication information sent by the network device in the first serving cell indicates the terminal device to start, prolong, or end DRX active time of a serving cell corresponding to another DRX in the at least two DRXs other than the first DRX, wherein the another DRX comprises the second DRX.

19. The method according to any one of claims 11 to 18, wherein the indication information sent by the network device in the first serving cell comprises a start moment at which the terminal device starts, prolongs, or ends the DRX active time of the second serving cell.

20. The method according to any one of claims 11 to 19, wherein the indication information sent by the network device in the first serving cell is carried in downlink control information DCI or a physical downlink shared channel PDSCH.

21. A discontinuous reception DRX control apparatus, comprising:
a receiving module, configured to receive indication information sent by a network device in a first serving cell of the apparatus, wherein the indication information indicates the apparatus to start, prolong, or end DRX active time of a second serving cell of the apparatus, the first serving cell is configured with a first DRX, the second serving cell is configured with a second DRX, and active time of a serving cell configured with the first DRX is different from active time of a serving cell configured with the second DRX; and
a processing module, configured to start, prolong, or end the DRX active time of the second serving cell based on the indication information.

22. A discontinuous reception DRX control apparatus, comprising:
a processing module, configured to obtain indication information, wherein the indication information indicates a terminal device to start, prolong, or end DRX active time of a second serving cell of the terminal device, wherein the second serving cell is configured with a second DRX; and
a sending module, configured to send indication information in a first serving cell of the terminal device, wherein the first serving cell is configured with a first DRX, and active time of a serving cell configured with the first DRX is different from active time of a serving cell configured with the second DRX.

23. A discontinuous reception DRX control apparatus, wherein the apparatus comprises:
at least one processor; and
a memory and a communication interface that are communicatively connected to the at least one processor, wherein
the memory stores instructions that can be executed by the at least one processor, and the at least one processor executes the instructions stored in the memory, to perform the method according to any one of claims 1 to 10, and 11 to 20.

24. A computer-readable storage medium, comprising a program or instructions, wherein when the program or the instructions is or are run on a computer, the method according to any one of claims 1 to 10, and 11 to 20 is enabled to be performed.
